# FASCICULE DE BREVET EUROPEEN

(11) **EP 0 742 403 B1**
(45) Date de publication et mention de la délivrance du brevet: **23.05.2001**
(21) Numéro de dépôt: 96106648.7
(22) Date de dépôt: 26.04.1996
(51) Int. Cl.: F16L 37/32

(54) **Raccord hydraulique étanche**
Fluiddichtkupplung
A fluid tight coupling

(30) Priorité: 28.04.1995 FR 9505319
(43) Date de publication de la demande: 13.11.1996
(73) Titulaire: VALEO, 75017 Paris (FR)
(72) Inventeur: Tobiasz, André, 93800 Epinay sur Seine (FR)
(74) Mandataire: Gamonal, Didier

(56) Documents cités:
- FR-A- 864 604
- FR-A- 2 688 291
- GB-A- 2 195 729

## Description

La présente invention concerne les raccords hydrauliques étanches, notamment pour les systèmes d'assistance hydraulique, en particulier pour commande hydraulique d'embrayage ou de freinage.

Un tel raccord est décrit par exemple dans le document FR-A-1 080 178 conforme au préambule de la revendication 1.

Dans celui-ci le raccord comprend deux éléments tubulaires agencés pour pouvoir être introduits télescopiquement l'un dans l'autre et un dispositif pour verrouiller les deux éléments lorsque l'un est introduit dans l'autre.

Chaque élément comporte une soupape de fermeture en sorte qu'il est possible de remplir au préalable chacune des moitiés du dispositif de commande hydraulique que le raccord relie entre elles.

Un tel raccord est relativement coûteux et c'est la raison pour laquelle on a proposé dans le document FR-A-2 688 291 de rendre les deux éléments du raccord identique entre eux, chaque élément comportant un corps cylindrique percé centralement pour réception de la partie du conduit déformable fixée audit corps par des broches cannelées. Les corps sont destinés à venir en butée l'un contre l'autre par leurs extrémités libres en position assemblée. Dans cette position les corps sont retenus par des moyens de verrouillage à pattes élastiques entourées par un collier de blocage.

Chaque corps cylindrique sert de réceptacle à un manchon de passage de fluide monté coaxialement à l'intérieur dudit corps. Chaque manchon comprend une extrémité libre fermée par un capuchon d'extrémité.

Les manchons sont en matière élastique et constituent ainsi un obturateur intervenant, à l'intérieur du corps, entre ledit corps et le capuchon d'extrémité pour rendre étanche l'élément du raccord lorsque lesdits éléments ne sont pas assemblés.

Lorsqu'on assemble les deux éléments, les deux capuchons d'extrémité viennent en contact l'un de l'autre, puis le mouvement étant poursuivi, les manchons sont comprimés ce qui entraîne un gonflement des manchons et un écartement par rapport au capuchon avec passage du fluide.

Ce type de réalisation présente l'inconvénient, avant interconnexion des deux parties du raccord, de mal résister à la pression car les manchons ont tendance à gonfler.

Ainsi la préparation séparée des deux moitiés du dispositif de commande hydraulique à remplissage préalable sous pression peut ne pas être fiable voire même être impossible du fait du gonflement du manchon élastique conduisant à un écartement par rapport au capuchon associé provoquant ainsi une perte d'étanchéité.

En outre on risque d'emprisonner de l'air lors de l'interconnexion des deux éléments car les manchons font saillie axialement par rapport au corps avec un jeu radial entre la périphérie externe des manchons élastiques et les corps.

L'invention a pour objet de pallier de manière simple et économique ces inconvénients.

La présente invention a donc pour objet de créer un nouveau raccord à deux éléments présentant une sûreté en matière d'étanchéité avant leur assemblage mutuel, tout en évitant l'introduction d'air lors de l'interconnexion des deux éléments et ce de manière simple et économique.

La présente invention est décrite par les caractéristiques de la revendication 1.

Suivant l'invention un raccord du type sus-indiqué pour interconnecter deux parties d'un conduit en matière déformable pour véhiculer un fluide et comprenant des obturateurs, est caractérisé en ce que les corps extérieurs sont conformés en partie mâle et femelle et sont destinés à venir en contact intime l'un avec l'autre, en ce que les manchons sont rigides et présentent au voisinage de leur extrémité libre au moins un passage de circulation de fluide, en ce que l'extrémité libre de la partie du conduit déformable est montée à serrage entre le corps extérieur et le manchon en s'étendant à l'arrière du passage du manchon, en ce que l'un des capuchons, dit capuchon mobile, est monté mobile axialement par rapport à l'extrémité libre du manchon en étant guidé par celui-ci, tandis que l'autre capuchon, dit capuchon fixe, est fixé à l'extrémité libre du manchon, en ce que l'un des obturateurs est formé par un joint d'étanchéité mobile axialement et propre à coopérer avec un siège porté extérieurement par le capuchon fixe, tandis que l'autre obturateur comprend un joint porté extérieurement par le capuchon mobile et propre à coopérer avec une portée de guidage et d'étanchéité, que présente localement intérieurement le corps extérieur.

Grâce à l'invention les corps extérieurs ont une forme plus simple que ceux de l'art antérieur et les manchons, outre leur fonction de passage de fluide, ont une fonction de fixation pour la partie concernée du conduit en matière déformable.

Ainsi on s'affranchit de la présence de broches de fixation comme décrit dans le document FR-A-2 688 291 et on obtient avec des éléments non identiques une réalisation plus économique et moins fragile avant assemblage des éléments.

En outre du fait de leur rigidité les manchons ne risquent pas de gonfler, en sorte qu'une perte d'étanchéité avant assemblage des deux éléments n'est pas à craindre.

Ces manchons réalisent une fonction supplémentaire. En effet le manchon à capuchon fixe constitue un poussoir repoussant le capuchon mobile à l'intérieur de son manchon associé formant tube de guidage.

On appréciera qu'on tire parti de la déformabilité du conduit pour fixer celui-ci en sorte que de manière simple et économique ledit conduit fait partie intégrante du raccord.

De plus lors de l'interconnexion des deux éléments, les deux capuchons d'extrémité s'épousent frontalement mutuellement et par exemple l'élément mâle établit l'étanchéité avec le joint mobile en refoulant celui-ci.

On notera que les obturateurs sont protégés car à l'état non assemblé ils sont recouverts par les corps extérieurs et que les corps facilitent l'assemblage.

Avantageusement un faible jeu existe entre le corps extérieur de l'autre élément et le joint mobile lorsque les capuchons viennent en contact l'un avec l'autre. Ce jeu permet d'évacuer l'air, le joint mobile étant déplacé ultérieurement.

De l'air ne risque pas ainsi d'être emprisonné d'autant plus que les corps extérieurs sont en contact intime l'un avec l'autre.

Selon une caractéristique des moyens de centrage sont propres à intervenir entre les deux capuchons d'extrémité en sorte que leur raccord est fiable et qu'un coincement du capuchon mobile est évité.

Selon une caractéristique le joint mobile et le capuchon mobile sont soumis chacun à l'action de moyens élastiques à action axiale, tels qu'un ressort hélicoïdal, prenant appui sur un joint d'étanchéité en contact avec la partie de conduit concernée en sorte que l'on obtient de manière économique des valves de fermeture.

Ainsi en exerçant l'effort sur chaque élément du raccord, on provoque la compression des moyens élastiques tout en gardant l'étanchéité à l'air. Bien entendu la raideur des moyens élastiques dépend des applications, ceux-ci devant être en mesure d'assurer l'étanchéité lorsque les éléments ne sont pas assemblés, tout en étant pas trop raides pour faciliter l'assemblage des deux éléments.

Avantageusement les corps extérieurs sont en forme de fourreau ce qui diminue le coût de fabrication. Ces fourreaux sont avantageusement dotés au niveau de leur portion arrière de saillies dirigées vers l'intérieur et ancrées dans l'extrémité libre de la partie concernée du conduit déformable pour fixation de ladite partie.

Bien entendu le manchon peut comporter également des saillies dirigées vers l'extérieur et ancrées dans ladite partie du conduit pour fixation de celle-ci. Ainsi on obtient une fixation solide des deux parties du conduit avec augmentation du serrage.

Le corps extérieur de l'élément femelle peut présenter des pattes élastiquement déformables appartenant aux moyens de verrouillage intervenant entre les deux éléments du raccord pour retenir ceux-ci à l'état assemblé. Ainsi on tire parti de l'élément femelle de plus grande longueur, tout en ayant une réduction du nombre de pièces, la présence d'un collier de blocage n'étant plus nécessaire.

Avantageusement les fourreaux sont métalliques en sorte que leur épaisseur peut être plus faible au bénéfice de la réduction de l'encombrement radial du raccord et d'une bonne tenue à la pression.

Les saillies de fixation des parties du conduit peuvent être alors obtenues aisément par poinçonnage de l'extérieur avec formation de griffes empêchant l'extraction de la partie de conduit.

Les pattes élastiquement déformables des moyens de verrouillage peuvent être obtenues aisément par découpe et coopérer avec l'extrémité arrière du corps extérieur de l'élément mâle.

Dans une forme de réalisation, c'est l'élément mâle qui porte le capuchon mobile.

Grâce à cette disposition l'extrémité libre du corps extérieur de l'élément mâle peut repousser le joint mobile porté par l'élément femelle.

Bien entendu il est possible d'inverser les structures.

La description qui va suivre illustre l'invention en regard des dessins annexés dans lesquels :

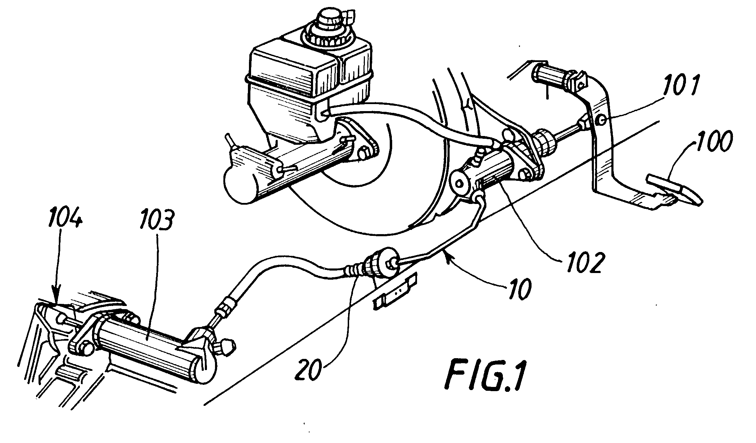

- la figure 1 est une vue schématique d'une commande hydraulique d'embrayage comportant un raccord selon l'invention ;
- la figure 2 est une vue en coupe axiale d'un raccord selon l'invention, la partie supérieure de cette vue correspond donc à la phase dans laquelle les deux éléments du raccord sont affrontés, la partie basse de la figure représentant la position d'interconnexion des deux éléments du raccord permettant le passage du liquide sous pression ;
- la figure 3 est une vue analogue à la figure 2 pour une variante de réalisation ;
- la figure 4 est une vue partielle montrant une patte élastiquement déformable appartenant aux moyens de verrouillage ;
- la figure 5 est une vue schématique montrant la formation de la collerette du tiroir de la figure 3.

Le raccord hydraulique étanche 20 selon l'invention est destiné à interconnecter, ici de manière rapide, deux parties 10A,10B d'un conduit 10 véhiculant un fluide. Ici le conduit est en matière déformable, par exemple en matière souple ou semi-rigide. Il est par exemple en matière plastique souple ou semi-rigide.

S'agissant d'une application à une commande hydraulique d'embrayage, le raccord hydraulique 20 est destiné à être monté entre l'émetteur 102 et le récepteur 103 de la commande.

Ainsi qu'on le sait une commande hydraulique d'embrayage comporte une pédale d'embrayage 100 propre à actionner un maître cylindrique 102 par l'intermédiaire d'une tige de poussée 101 reliée au piston non visible du maître cylindre 102.

Le conduit 10 relie le maître cylindre 102, formant l'émetteur de la commande, au récepteur 103 dont le piston non visible est relié à une tige propre à agir sur la fourchette de débrayage 104. Il peut être souhaitable de remplir à l'avance le récepteur 103 et l'émetteur 102. Ceci est réalisé grâce au raccord 20 selon l'invention.

Ici le raccord 20 comporte deux éléments 21,22 comprenant chacun un corps cylindrique extérieur creux 1,11 recevant l'extrémité libre de la partie concernée 10A,10B du conduit 10 déformable.

Chaque élément 21,22 comporte un manchon 4 de passage de fluide monté coaxialement à l'intérieur du corps extérieur 1, 11 et comprenant une extrémité libre fermée par un capuchon d'extrémité 5,12. Ces capuchons d'extrémité sont portés et retenus par l'extrémité libre de leur manchon associé 4 et sont destinés à venir en contact frontalement l'un avec l'autre lors de l'assemblage des deux éléments 21,22. Ici les capuchons 5,12 sont à base d'aluminium.

Chaque élément 21,22 comporte un obturateur 6,12-13 intervenant à l'intérieur du corps extérieur 1,11 entre ledit corps et le capuchon d'extrémité 5,12 pour rendre étanche l'élément 21,22 du raccord lorsque lesdits éléments ne sont pas assemblés.

Des moyens de verrouillage 2, ici débrayables, interviennent entre les deux éléments 21,22 pour retenir ceux-ci à l'état assemblé.

Suivant une caractéristique de l'invention les corps extérieurs 1,11 sont conformés en partie mâle et femelle et sont destinés à venir en contact intime l'un avec l'autre. Les manchons 4 sont rigides et présentent au voisinage de leur extrémité libre au moins un passage 25 de circulation du fluide. Ici les manchons 4 sont métalliques.

Grâce à la rigidité des manchons, suivant une caractéristique de l'invention, chaque extrémité libre de la partie 10A,10B du conduit déformable 10 est montée à serrage entre le corps extérieur 1,11 et le manchon 4 en s'étendant à l'arrière du passage de fluide 25 du manchon 4.

L'un 12 des capuchons 5,12, dit capuchon mobile, est monté mobile axialement par rapport à l'extrémité libre du manchon 4, tandis que l'autre 5 capuchon, dit capuchon fixe, est fixé à l'extrémité libre du manchon 4. Le capuchon mobile 12 est guidé par son manchon 4.

L'un des obturateurs 6,12 est formé par un joint d'étanchéité 6 mobile axialement et propre à coopérer, lorsque les éléments 21,22 ne sont pas assemblés, avec un siège 26 porté extérieurement par le capuchon fixe 5, tandis que l'autre obturateur 12,13 comprend un joint d'étanchéité 13 porté extérieurement par le capuchon mobile 12 et propre à coopérer avec une portée de guidage de d'étanchéité 27, que présente localement intérieurement en saillie radiale le corps extérieur 11.

Ici chaque corps extérieur 1,11 consiste en un fourreau cylindrique de forme tubulaire présentant une portion arrière pour serrage de l'extrémité de la partie concernée 10A,10B du conduit déformable 10.

Ladite portion arrière présente des saillies 3 dirigées vers l'intérieur et ancrées dans l'extrémité libre déformable de la partie 10A,10B concernée du conduit 10 pour fixation de ladite partie.

Chaque manchon 4 comporte des saillies (non référencées) dirigées vers l'extérieur et ancrées dans l'extrémité libre déformable de ladite partie 10A,10B du conduit 10.

Ainsi on obtient une fixation solide et sûre des parties 10A et 10B dans les éléments 21,22 et ces parties appartiennent de manière simple et économique au raccord 20.

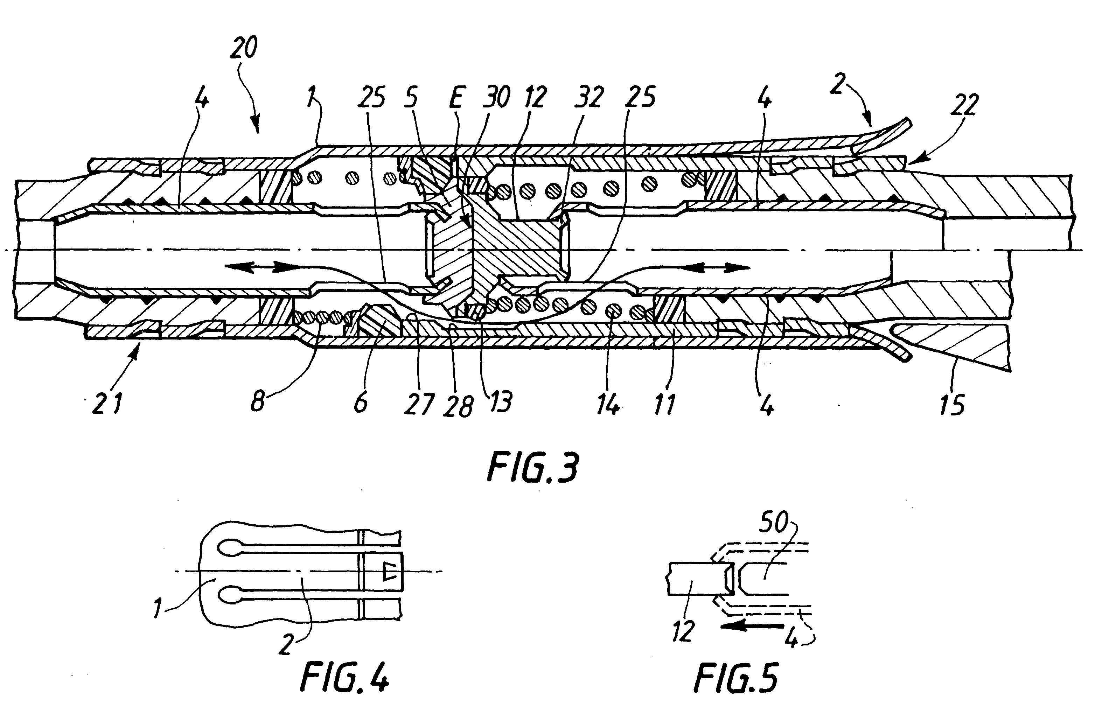

Le fourreau 1 de l'élément femelle 21 présente à son extrémité libre, à la faveur de fentes débouchant dans des orifices élargis (figure 4), des pattes élastiquement déformables 2 appartenant aux moyens de verrouillage précités.

Ici ces pattes 2 sont destinées à venir en prise avec l'extrémité arrière du fourreau 11 de l'élément mâle 22 et présentent à cet effet au moins un cran d'extrémité incliné. Ici comme visible à la figure 4, un seul cran est prévu à l'extrémité libre de la patte.

Les fourreaux 1,11 peuvent être en matière plastique renforcée par des fibres mais ici ils sont avantageusement métalliques ce qui permet de diminuer l'épaisseur des fourreaux et d'avoir un raccord 20 résistant bien à la pression. En outre ces fourreaux 1,11 métalliques permettent d'obtenir simplement les saillies 3 et les languettes 2.

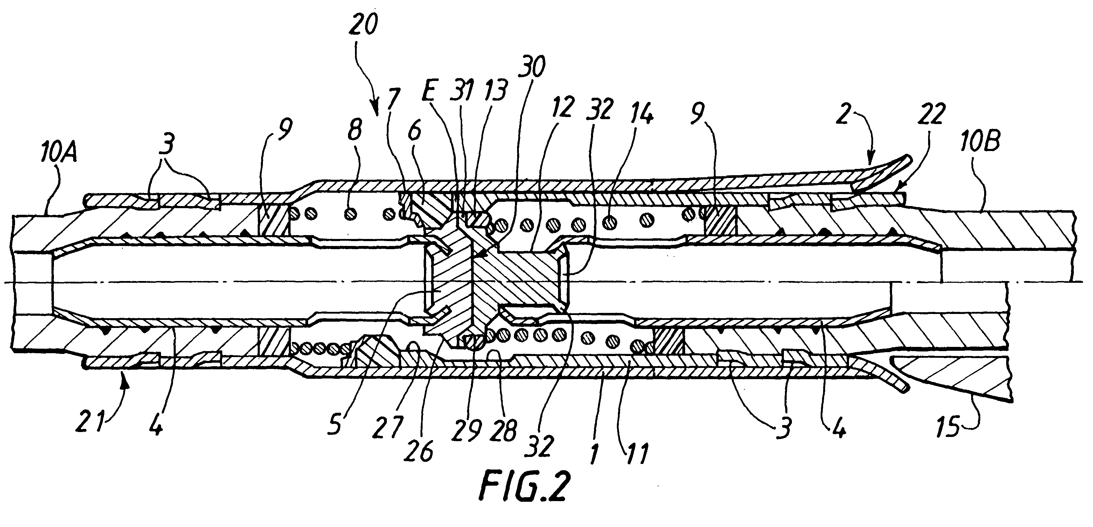

Ainsi les saillies 3 peuvent être obtenues à partir de l'extérieur, par découpe puis pliage vers l'intérieur, en variante par emboutissage vers l'intérieur ou par poinçonnage à partir de l'extérieur avec formation de griffes 3 (figures 2 et 3) orientées vers l'extrémité libre des parties 10A,10B pour éviter leur extraction.

Ces saillies augmentent le serrage des parties 10A,10B et peuvent consister en des empreintes ou autres et constituent en quelque sorte des crans ou des griffes ou des dents de scie.

Les pattes élastiquement déformables 2 sont obtenues aisément par découpe et pliage et peuvent avoir une grande longueur du fait que l'élément femelle 21 recouvre l'élément mâle 22.

On notera que l'extrémité libre du fourreau 1 de l'élément femelle 21 est évasée pour faciliter l'introduction du fourreau 11 de l'élément mâle 22. Cet élément mâle est introduit (enfilé), pour assemblage des deux éléments 21,22 du raccord, de manière télescopiquement à l'intérieur de l'élément femelle 21.

Plus précisément la périphérie externe du fourreau 11 de l'élément mâle 22 est destinée à venir en contact intime avec la périphérie interne du fourreau 1 de l'élément femelle 21 en étant ainsi guidé axialement.

Cet élément femelle 21 présente une portion arrière dotée de saillies 3 (ici des griffes) de diamètre réduit par rapport à la partie principale du fourreau 1 pour création d'un changement de diamètre afin que le fourreau 1 de l'élément femelle 21 puisse envelopper le fourreau 11 de l'élément mâle 22.

On notera que les crans des languettes élastiquement déformables 2 sont formés à la faveur de l'évasement de l'extrémité libre du fourreau 1 femelle. Ces crans sont destinés à venir en prise avec l'extrémité arrière du fourreau mâle 11. Cette extrémité arrière est biseautée à cet effet.

Ici c'est l'élément mâle 22 qui porte le capuchon mobile 12. Ce capuchon mobile 12, formant tiroir, présente une queue de diamètre réduit avec une extrémité dotée d'une collerette 32 destinée à venir en contact avec l'alésage interne du manchon 4. Ce manchon 4 présente une extrémité libre de forme rétreinte. Ladite extrémité libre est engagée dans une gorge, que présente la queue du tiroir 12 comme visible dans les figures 2 et 3. Le tiroir 12 est donc monté, par sa queue, mobile axialement dans l'alésage du manchon 4 en étant guidé par sa collerette pointue 32.

A l'état non assemblé la collerette est en contact avec l'extrémité libre du manchon 4 conformé pour épouser le flanc incliné de la collerette 32. Cette extrémité libre guide également le tiroir 12 et retient celui-ci.

La partie frontale du tiroir 12 présente une portée annulaire d'orientation axiale 29 pour centrage du joint d'étanchéité 13, ici un joint torique.

Des moyens élastiques à action axiale 14 prennent appui sur le poussoir 12 au niveau de sa partie frontale épaulée à cet effet et sur un joint d'étanchéité 9 en appui axial contre la partie déformable 10B du conduit 10. Radialement ce joint d'étanchéité statique 9 est intercalé sous précontrainte entre la périphérie externe du manchon 4 et la périphérie interne du fourreau 11.

Le capuchon fixe 5 est fixé par sertissage à l'extrémité libre du manchon 4. Plus précisément le capuchon 5 présente initialement dorsalement une portion de diamètre réduit permettant l'enfilage du capuchon 5 dans l'extrémité libre de forme rétreinte du manchon 4 avec contact avec la face externe de ladite extrémité libre. La face dorsale de la portion de diamètre réduit, présentant un évidement en forme de trou borgne, on introduit un poinçon chanfreiné dans le manchon 4, puis on procède au sertissage au cours duquel le poinçon fait fluer le bord du trou borgne pour arriver à la configuration de la figure 2.

Ce capuchon 5 forme donc un bouchon et présente une portion annulaire 26 de forme tronconique formant un siège pour le joint d'étanchéité mobile 6 porté à mobilité axiale par l'élément femelle 21.

Le joint 6 comporte donc une face inclinée pour coopérer de manière complémentaire avec le siège 26 et créer ainsi une étanchéité.

Des moyens élastiques à action axiale 8 sollicitent le joint 6 au contact du siège 26 et prennent appui sur un joint d'étanchéité 9, lui-même en appui contre la partie 10A du conduit 10 et interposé radialement entre la périphérie externe du manchon 4 et la périphérie interne du fourreau comme le joint 9 de l'élément mâle. Ici les moyens élastiques 14 et 8 consistent en des ressorts hélicoïdaux entourant l'extrémité libre des manchons 4.

Le ressort 8 s'appuie sur le joint 6 par l'intermédiaire d'une pièce métallique d'interposition 7 pour éviter l'incrustation du ressort dans le joint 6 de forme trapézoïdale.

Ici plusieurs passages 25, répartis régulièrement circulairement, sont prévues par manchon 4. Ce nombre dépend des applications.

Les passages ou communications 25 consistent en des trous oblongs s'étendant jusqu'au voisinage des joints 9. On notera que les manchons 4 présentent à leur extrémité arrière un rétreint pour ne pas blesser les parties 10A et 10B.

L'extrémité libre du fourreau mâle 11 présente intérieurement une portée cylindrique d'orientation axiale 27 formant une portée de guidage et d'étanchéité pour le joint d'étanchéité 13. Cette portion 27 est suivie par une gorge 28 de dégagement favorisant le passage du fluide comme mieux visible à la figure 3.

Ainsi avant assemblage des deux éléments 21,22, les joints 6 et 13 assurent par coopération respectivement avec leur siège 26 et leur portée 27 l'étanchéité des éléments 21 et 22. Ceux-ci peuvent être sous pression.

On notera que la pression du fluide écrase le joint 6 au contact de son siège 26 et que ladite pression écrase le joint 13 au contact d'un épaulement radial 31 formé à la faveur d'une collerette radiale délimitant la portée de centrage cylindrique 29. Sous la pression le joint 13 est également admis à venir s'appliquer contre la portée 27.

Avant assemblage, la collerette 32 de la queue du tiroir 12 vient en contact avec l'extrémité libre rétreinte du manchon 4, en sorte que le joint 13 est en contact avec sa portée 27. Le manchon 4 maintient donc axialement, grâce à son extrémité libre rétreinte, la collerette 32.

Des moyens de centrage interviennent entre le bouchon 5 et le tiroir 12. Pour ce faire le tiroir 12 présente centralement frontalement une cavité tronconique avec un fond plat délimité par un rebord tronconique et le bouchon 5 présente une saillie axiale épousant la forme de la cavité du tiroir 12.

Ainsi ladite saillie forme un élément mâle pénétrant de manière complémentaire dans la cavité du tiroir 12 formant élément femelle.

Grâce à la coopération des flancs tronconiques, on obtient un bon guidage axial du tiroir 12 lorsque l'élément mâle est enfoncé dans l'élément femelle lors de l'assemblage.

Lors de cet enfoncement, le bouchon 5 avec son manchon 4 fait office de poussoir et le tiroir 12 s'enfonce dans le manchon 4.

Au cours de cet enfoncement l'extrémité libre du fourreau 11 vient en contact avec le joint 6 et déplace-celui-ci axialement, ledit joint 6 glissant dans l'alésage interne du fourreau 1 de l'élément femelle 21.

Ainsi lors de la connexion les deux capuchons d'extrémité 5,6 et 12 s'épousent mutuellement en provoquant une compression des deux ressorts 8 et 14 tout en gardant l'étanchéité entre les fourreaux 1,11 et les joints 6,13.

La connexion se termine par un mouvement des languettes 2 qui se rabattent derrière l'extrémité du fourreau 11 de l'élément mâle.

Plus précisément un jeu fonctionnel E existe entre l'extrémité libre du fourreau 11 et le joint mobile 6 lorsque les capuchons 5,6 viennent en contact mutuel c'est-à-dire lors de leur accostage.

Ainsi lors de l'assemblage télescopique des deux éléments 21,22, dans un premier temps, il y a contact entre le bouchon 5 et le tiroir 12 avec centrage mutuel desdites pièces et évacuation de l'air rendue possible par le jeu E.

Dans un deuxième temps on rattrape le jeu E avec évacuation de l'air jusqu'à l'établissement d'une étanchéité entre le fourreau 11 (l'extrémité libre de celui-ci) et le joint mobile 6.

Dans un troisième temps on ouvre un passage entre le joint mobile 6 et le capuchon 5, le joint 6 quittant alors son siège 26.

Dans un quatrième temps le joint 13 se déplace en regard de la gorge 28 avec communication de fluide entre les deux éléments 21,22.

En se référant à la figure 3, on appréciera que cette circulation est réalisée de manière aisée sans grande turbulence.

Le mouvement se termine par le verrouillage des pattes 2, les crans desdites pattes 2 venant en prise avec le bord arrière du fourreau 11.

Ainsi la longueur de la portée cylindrique 27 est fonction du jeu E et des étapes de l'assemblage.

On notera que la partie supérieure du joint mobile 6 est de forme rectangulaire pour contact avec le fourreau 11, sa partie inférieure étant de forme trapézoïdale.

On appréciera que ce raccord est connectable de manière rapide et est également démontable de manière rapide. Pour cela il suffit d'utiliser une clé 15 à extrémité rétreinte pour soulever les languettes 2 et déconnecter les éléments 21 et 22.

Dans la figure 2 les manchons 4 sont composés de deux demicoquilles ce qui favorise le montage du bouchon 5 et du tiroir 12.

En variante (figure 3) les manchons 4 sont d'un seul tenant. Dans ce cas le tiroir 12 présente, au niveau de la face dorsale de sa queue, un trou borgne et à l'aide d'un poinçon 50 (figure 5) à extrémité tronconique et introduit à l'intérieur du manchon 4, on procède à un rabattement de manière conduisant à la formation de la collerette 32. Dans cette figure 3 on a représenté le chemin suivi par le fluide lorsque les deux éléments 21 et 22 sont interconnectés.

Bien entendu le diamètre externe du bouchon 5 est tel qu'il n'interfère pas avec le manchon 11 de l'élément femelle. Ici ce diamètre externe est globalement égal au diamètre de la portée 27.

On notera que la forme du joint 6, grâce à sa face inclinée, favorise l'écoulement du fluide.

Bien entendu la présente invention n'est pas limitée à l'exemple de réalisation décrit. En particulier on peut inverser les structures, le capuchon fixe 5 étant alors porté par l'élément mâle 22 et le capuchon mobile 12 par l'élément femelle 21

Bien entendu ce raccord peut être utilisé dans tout système d'assistance hydraulique.

Néanmoins son utilisation est avantageuse dans le cadre d'une commande hydraulique d'embrayage car les pressions sont compatibles avec la fixation décrite ci-dessus des parties 10A, 10B.

De préférence le raccord mâle est alors associé à l'émetteur 102 pré-rempli et le raccord femelle au récepteur 103 pré-rempli car l'élément mâle 22 résiste à des pressions plus élevées.

## Revendications

1. Raccord hydraulique étanche pour interconnecter deux parties (10A,10B) d'un conduit (10) en matière déformable pour véhiculer un fluide, notamment pour commande hydraulique d'embrayage, comportant deux éléments (21,22) comprenant chacun un corps cylindrique extérieur creux (1,11) recevant l'extrémité libre de la partie concernée (10A,10B) du conduit déformable (10), un manchon (4) de passage de fluide monté coaxialement à l'intérieur du corps extérieur (1,11) et comprenant une extrémité libre fermée par un capuchon d'extrémité (5,12), un obturateur (6,12-13) intervenant à l'intérieur du corps extérieur (1,11) entre ledit corps et le capuchon d'extrémité (5,12) pour rendre étanche l'élément (21,22) du raccord (20) lorsque lesdits éléments ne sont pas assemblés entre eux des moyens élastiques à action axiale prenant appui sur la partie (10A, 10B) pour solliciter l'obturateur et rendre étanche lesdits éléments lorsqu'ils ne sont pas assemblés, des moyens de verrouillage débrayables (2) intervenant entre les deux éléments (21,22) pour retenir ceux-ci à l'état assemblé, dans lequel les capuchons d'extrémité (5,12) sont portés et retenus par leur manchon associé et sont destinés à venir en contact frontalement l'un avec l'autre lors de l'assemblage des deux éléments (21,22) pour permettre le passage du fluide, caractérisé en ce que les corps extérieurs (1,11) sont conformés en partie mâle et femelle et sont destinés à venir en contact intime l'un avec l'autre, en ce que les manchons (4) sont rigides et présentent au voisinage de leurs extrémités libres au moins un passage (25) de circulation de fluide, en ce que chaque extrémité libre de la partie (10A,10B) du conduit déformable (10) est montée à serrage entre le corps extérieur (1,11) et le manchon (4) en s'étendant à l'arrière du passage (25) du manchon (4), en ce que l'un (5) des capuchons (12), dit capuchon mobile, est monté mobile axialement par rapport à l'extrémité libre du manchon (4) en étant guidé par celui-ci, tandis que l'autre (5), dit capuchon fixe, est fixé à l'extrémité libre du manchon (4), en ce que l'un des obturateurs (6,12) est formé par un joint d'étanchéité (6) mobile axialement et propre à coopérer avec un siège (26) porté extérieurement par le capuchon fixe (5), tandis que l'autre obturateur comprend un joint d'étanchéité (13) porté extérieurement par le capuchon mobile (12) et propre à coopérer avec une portée de guidage et d'étanchéité (27), que présente localement intérieurement le corps extérieur (11) concerné.

2. Raccord selon la revendication 1, caractérisé en ce que chaque corps extérieurs (1,11) consiste en un fourreau cylindrique présentant une portion arrière pour serrage de l'extrémité de l'extrémité déformable de la partie concernée (10A,10B) du conduit déformable (10).

3. Raccord selon la revendication 2, caractérisé en ce que ladite partie du fourreau (11) présente des saillies (3) dirigées vers l'intérieur et ancrées dans l'extrémité libre déformable de ladite partie (10A,10B) du conduit déformable (10) pour fixation de celle-ci.

4. Raccord selon la revendication 3, caractérisé en ce que lesdites saillies consistent en des griffes (3) poinçonnées à partir de l'extérieur.

5. Raccord selon la revendication 3 ou 4, caractérisé en ce que le manchon (3) comporte des saillies dirigées vers l'extérieur et ancrées dans ladite partie du conduit déformable (10) pour fixation de celle-ci.

6. Raccord selon l'une quelconque des revendications 2 à 5, caractérisé en ce que le fourreau (1) de l'élément femelle (22) présente à son extrémité libre des pattes élastiquement déformables (2) appartenant auxdits moyens de verrouillage débrayables.

7. Raccord selon la revendication 6, caractérisé en ce que lesdites pattes sont destinées à venir en prise avec l'extrémité arrière du fourreau (11) de l'élément mâle (22) et présentent à cet effet au moins un cran d'extrémité incliné.

8. Raccord selon la revendication 6 ou 7, caractérisé en ce que l'extrémité libre du fourreau (1) de l'élément femelle (21) est évasée.

9. Raccord selon l'une quelconque des revendications 2 à 8, caractérisé en ce que les fourreaux (1,11) sont métalliques.

10. Raccord selon l'une quelconque des revendications 1 à 9, caractérisé en ce que le joint d'étanchéité mobile (6) et le capuchon mobile (12) sont chacun soumis à l'action de moyens élastiques à action axiale prenant appui sur un joint d'étanchéité fixe (9) calé axialement par la partie (10A,10B) du conduit (10) et radialement par le manchon (4) et le fourreau (1,11).

11. Raccord selon la revendication 10, caractérisé en ce que le capuchon fixe (5) consiste en un bouchon présentant une portion tronconique (26) pour formation du siège pour le joint d'étanchéité mobile (6) présentant une face inclinée complémentaire.

12. Raccord selon la revendication 10 ou 11, caractérisé en ce que le capuchon mobile (12) est propre à coulisser axialement à l'intérieur du manchon (4) associé.

13. Raccord selon la revendication 12, caractérisé en ce que le capuchon mobile (12) présente une collerette (32) pour son maintien axial par le manchon (4).

14. Raccord selon la revendication 12 ou 13, caractérisé en ce que le capuchon mobile (12) présente une portée cylindrique de centrage (29) pour son joint d'étanchéité associé (13), ladite portée étant prolongée par un épaulement radial (31).

15. Raccord selon la revendication 14, caractérisé en ce que la portée de guidage (27) du fourreau (11) est prolongée par une gorge de dégagement (28) permettant le passage du fluide lorsque les deux éléments (21,22) sont assemblés.

16. Raccord selon l'une quelconque des revendications 2 à 15, caractérisé en ce que le joint d'étanchéité mobile (6) est propre à coulisser axialement le long de l'alésage interne du fourreau (1) de l'élément (21,22) concerné.

17. Raccord selon l'une quelconque des revendications 1 à 16, caractérisé en ce que les moyens de centrage (30) interviennent entre le capuchon fixe (5) et le capuchon mobile (12).

18. Raccord selon la revendication 17, caractérisé en ce que les moyens de centrage comportent une cavité tronconique à fond plat formée frontalement dans le capuchon mobile (12) et une saillie complémentaire formée frontalement dans le capuchon fixe (5).

19. Raccord selon l'une quelconque des revendications 16 à 18, caractérisé en ce qu'un jeu (E) existe entre le joint d'étanchéité mobile (6) et le fourreau (11) de l'autre élément (22) lorsque les capuchons (5,12) viennent en contact mutuel.

20. Raccord selon l'une quelconque des revendications 1 à 19, caractérisé en ce que le capuchon fixe (5) et le joint d'étanchéité mobile (6) sont portés par l'élément femelle (21), tandis que le capuchon mobile (12) et son joint d'étanchéité associé (13) sont portés par l'élément mâle (22).

## Claims

1. A sealed hydraulic coupling for interconnecting two parts (10A, 10B) of a duct (10) of deformable material for conveying a fluid, in particular for hydraulic clutch control, comprising two elements (21, 22) each of which comprises a hollow external cylindrical body (1, 11) receiving the free end of the corresponding part (10A, 10B) of the deformable duct (10), a fluid passage sleeve (4) mounted coaxially within the external body (1, 11) and having a free end closed by an end closure (5, 12), an obturator (6, 12, 13) being interposed within the external body (1, 11) between the said body and the end closure (5, 12) so as to seal the element (21, 22) of the coupling (20) when the said elements are not assembled together, axially acting resilient means being in engagement on the part concerned (10A, 10B) so as to bias the obturator and to seal the said elements when they are not assembled together, with disengageable locking means (2) being interposed between the two elements (21, 22) so as to retain the latter in the assembled state, wherein the end closure members (5, 12) are carried and retained by their associated sleeves and are adapted to come into frontal contact with each other while the two elements (21, 22) are being assembled together, to enable fluid to pass, characterised in that the external bodies (1, 11) consist of male and female parts, and are adapted to come into intimate contact with each other, in that the sleeves (4) are rigid and have in the vicinity of their free ends at least one fluid flow passage (25), in that the free end of each part (10A, 10B) of the deformable duct (10) is clamped between the external body (1, 11) and the sleeve (4), extending to the rear of the passage (25) in the sleeve (4), in that one (12) of the end closure members (5, 12), referred to as the movable closure member, is mounted for axial movement with respect to the free end of the sleeve (4), being guided by the latter, while the other one (5), referred to as the fixed closure member, is fixed to the free end of the sleeve (4), in that one of the obturators (6, 12) consists of a sealing ring (6) movable axially and arranged to cooperate with a seating (26) carried externally by the fixed closure member (5), while the other obturator includes a sealing ring (13), carried on the outside of the movable closure member (12) and adapted to cooperate with a guide and sealing surface (27) formed locally and internally on the external body (11) concerned.

2. A coupling according to Claim 1, characterised in that each external body (1, 11) consists of a cylindrical ferrule having a rear portion for gripping the deformable end portion of the appropriate part (10A, 10B) of the deformable duct (10).

3. A coupling according to Claim 2, characterised in that the said portion of the ferrule (11) has projecting elements (3) extending inwards and anchored in the deformable free end portion of the said part (10A, 10B) of the deformable duct (10) for fastening the latter.

4. A coupling according to Claim 3, characterised in that the said projecting elements consist of claws formed by punching from outside.

5. A coupling according to Claim 3 or Claim 4, characterised in that the sleeve (3) includes outwardly projecting elements anchored in the said part of the deformable duct (10), for fastening the latter.

6. A coupling according to any one of Claims 2 to 5, characterised in that the ferrule (1) of the female element (22) has at its free end resiliently deformable lugs (2) of the said disengageable locking means.

7. A coupling according to Claim 6, characterised in that the said lugs are arranged to come into engagement with the rear end of the ferrule (11) of the male element (22), and for this purpose they have at least one inclined terminal nib.

8. A coupling according to Claim 6 or Claim 7, characterised in that the free end of the ferrule (1) of the female element (21) is flared.

9. A coupling according to any one of Claims 2 to 8, characterised in that the ferrules (1, 11) are of metal.

10. A coupling according to any one of Claims 1 to 9, characterised in that the movable sealing ring (6) and the movable closure member (12) are each subjected to the action of axially acting resilient means which bear on a fixed sealing ring (9) which is located axially by the corresponding part (10A, 10B) of the duct (10) and radially by the sleeve (4) and the ferrule (1, 11).

11. A coupling according to Claim 10, characterised in that the fixed closure member (5) consists of a plug having a frusto-conical portion (26) to define the seating for the movable sealing joint (6), which has a complementary inclined face.

12. A coupling according to Claim 10 or Claim 11, characterised in that the movable closure member (12) is arranged to slide axially within the associated sleeve (4).

13. A coupling according to Claim 12, characterised in that the movable closure member (12) has a collar portion (32) whereby it is retained axially by the sleeve (4).

14. A coupling according to Claim 12 or Claim 13, characterised in that the movable closure member (12) includes a cylindrical centring surface (29) for its associated sealing ring (13), the said surface being extended by a radial shoulder (31).

15. A coupling according to Claim 14, characterised in that the guide surface (27) of the ferrule (11) is extended by a relief groove (28) through which fluid can pass when the two elements (21, 22) are assembled together.

16. A coupling according to any one of Claims 2 to 15, characterised in that the movable sealing ring (6) is adapted to slide axially along the internal bore of the ferrule (1) of the appropriate element (21, 22).

17. A coupling according to any one of Claims 1 to 16, characterised in that the centring means (30) are interposed between the fixed closure member (5) and the movable closure member (12).

18. A coupling according to Claim 17, characterised in that the centring means comprise a frusto-conical cavity with a flat base formed in the front of the movable closure member (12), and a complementary projecting element formed in the front of the fixed closure member (5).

19. A coupling according to any one of Claims 16 to 18, characterised in that there is a clearance (E) between the movable sealing ring (6) and the ferrule (11) of the other element (22) when the closure members (5, 12) come into mutual contact.

20. A coupling according to any one of Claims 1 to 19, characterised in that the fixed closure member (5) and the movable sealing ring (6) are carried by the female elements (21), while the movable closure member (12) and its associated sealing ring (13) are carried by the male element (22).

## Patentansprüche

1. Dichter Hydraulikanschluß zur Verbindung zweier Teile (10A, 10B) einer Leitung (10) aus verformbarem Werkstoff zur Beförderung eines Fluids, vor allem für eine hydraulische Kupplungsbetätigung, umfassend zwei Elemente (21, 22), die jeweils einen hohlen zylindrischen Außenkörper (1, 11) zur Aufnahme des freien Endes des betreffenden Teils (10A, 10B) der verformbaren Leitung (10) enthalten, sowie eine Fluiddurchlaßmuffe (4), die koaxial im Innern des Außenkörpers (1, 11) angebracht ist und ein durch eine Abschlußkappe (5, 12) verschlossenes freies Ende umfaßt, einen Verschluß (6, 12-13), der im Innern des Außenkörpers (1, 11) zwischen dem besagten Körper und der Abschlußkappe (5, 12) zum Einsatz kommt, um das Element (21, 22) des Anschlusses (20) abzudichten, wenn die besagten Elemente nicht untereinander zusammengefügt sind, axial wirksame elastische Mittel, die auf dem Teil (10A, 10B) zur Anlage kommen, um den Verschluß zu beaufschlagen und die besagten Elemente abzudichten, wenn sie nicht zusammengefügt sind, ausrückbare Verriegelungsmittel (2), die zwischen den beiden Elementen (21, 22) zum Einsatz kommen, um diese im zusammengefügten Zustand festzuhalten, wobei die Abschlußkappen (5, 12) durch ihre zugehörige Muffe gelagert und festgehalten werden und dazu bestimmt sind, bei der Zusammenfügung der beiden Elemente (21, 22) stirnseitig miteinander in Kontakt zu kommen, um den Durchlaß des Fluids zu ermöglichen, **dadurch gekennzeichnet**, daß die Außenkörper (1, 11) als Steck- und Aufnahmeteil gestaltet und dazu bestimmt sind, in engen Kontakt miteinander zu kommen, daß die Muffen (4) starr sind und in der Nähe ihrer freien Ende wenigstens einen Fluidumlaufdurchlaß (25) aufweisen, daß das freie Ende des Teils (10A, 10B) der verformbaren Leitung (10) zwischen dem Außenkörper (1, 11) und der Muffe (4) eingespannt angebracht ist, wobei es sich hinter dem Durchlaß (25) der Muffe (4) erstreckt, daß eine (5) der Abschlußkappen (12), die als bewegliche Abschlußkappe bezeichnet wird, im Verhältnis zum freien Ende der Muffe (4) axial beweglich angebracht und durch diese geführt ist, während die andere Abschlußkappe (5), die als feste Abschlußkappe bezeichnet wird, am freien Ende der Muffe (4) befestigt ist, daß einer der Verschlüsse (6, 12) durch eine axial bewegliche Dichtung (6) gebildet wird, die mit einem außen an der festen Abschlußkappe (5) angebrachten Sitz (26) zusammenwirken kann, während der andere Verschluß eine außen an der beweglichen Abschlußkappe (12) angebrachte Dichtung (13) umfaßt, die mit einer Führungs-und Dichtungsfläche (27) zusammenwirken kann, die der betreffende Außenkörper (11) örtlich innen aufweist.

2. Anschluß nach Anspruch 1, **dadurch gekennzeichnet,** daß jeder Außenkörper (1, 11) aus einer zylindrischen Buchse besteht, die einen hinteren Abschnitt zur Einspannung des verformbaren Endes des betreffenden Teils (10A, 10B) der verformbaren Leitung (10) aufweist.

3. Anschluß nach Anspruch 2, **dadurch gekennzeichnet,** daß der besagte Teil der Buchse (11) nach innen gerichtete und im verformbaren freien Ende des besagten Teils (10A, 10B) der verformbaren Leitung (10) verankerte Vorsprünge (3) für dessen Befestigung aufweist.

4. Anschluß nach Anspruch 3, **dadurch gekennzeichnet,** daß die besagten Vorsprünge aus von außen gestanzten Krallen (3) bestehen.

5. Anschluß nach Anspruch 3 oder 4, **dadurch gekennzeichnet**, daß die Muffe (3) nach außen gerichtete und in dem besagten Teil der verformbaren Leitung (10) verankerte Vorsprünge für dessen Befestigung umfaßt.

6. Anschluß nach einem der Ansprüche 2 bis 5, **dadurch gekennzeichnet**, daß die Buchse (1) des Aufnahmeelements (22) an seinem freien Ende elastisch verformbare Ansätze (2) aufweist, die zu den besagten ausrückbaren Verriegelungsmitteln gehören.

7. Anschluß nach Anspruch 6, **dadurch gekennzeichnet,** daß die besagten Ansätze dazu bestimmt sind, mit dem hinteren Ende der Buchse (11) des Steckelements (22) in Eingriff zu kommen, und dazu wenigstens eine geneigte Abschlußraste aufweisen.

8. Anschluß nach Anspruch 6 oder 7, **dadurch gekennzeichnet**, daß das freie Ende der Buchse (1) des Aufnahmeelements (21) konisch erweitert ist.

9. Anschluß nach einem der Ansprüche 2 bis 8, **dadurch gekennzeichnet**, daß die Buchsen (1, 11) aus Metall ausgeführt sind.

10. Anschluß nach einem der Ansprüche 1 bis 9, **dadurch gekennzeichnet**, daß die bewegliche Dichtung (6) und die bewegliche Abschlußkappe (12) jeweils der Einwirkung von axial wirksamen elastischen Mitteln ausgesetzt sind, die auf einer festen Dichtung (9) zur Anlage kommen, die axial durch den Teil (10A, 10B) der Leitung (10) und radial durch die Muffe (4) und die Buchse (1, 11) gesichert ist.

11. Anschluß nach Anspruch 10, **dadurch gekennzeichnet,** daß die feste Abschlußkappe (5) aus einem Verschlußstopfen besteht, der einen kegelstumpfförmigen Abschnitt (26) zur Bildung des Sitzes für die bewegliche Dichtung (6) aufweist, die eine formschlüssige geneigte Fläche besitzt.

12. Anschluß nach Anspruch 10 oder 11, **dadurch gekennzeichnet**, daß sich die bewegliche Abschlußkappe (12) im Innern der zugehörigen Muffe (4) axial gleitend verschieben kann.

13. Anschluß nach Anspruch 12, **dadurch gekennzeichnet,** daß die bewegliche Abschlußkappe (12) einen Kragen (32) für ihr axiales Halten durch die Muffe (4) aufweist.

14. Anschluß nach Anspruch 12 oder 13, **dadurch gekennzeichnet**, daß die bewegliche Abschlußkappe (12) eine zylindrische Zentrierfläche (29) für ihre zugehörige Dichtung (13) aufweist, wobei die besagte Zentrierfläche durch eine radiale Schulter (31) verlängert wird.

15. Anschluß nach Anspruch 14, **dadurch gekennzeichnet,** daß die Führungsfläche (27) der Buchse (11) durch eine Auskehlung (28) verlängert wird, die den Durchlaß des Fluids ermöglicht, wenn die beiden Elemente (21, 22) zusammengefügt sind.

16. Anschluß nach einem der Ansprüche 2 bis 15, **dadurch gekennzeichnet**, daß sich die bewegliche Dichtung (6) entlang der Innenbohrung der Buchse (1) des betreffenden Elements (21, 22) axial gleitend verschieben kann.

17. Anschluß nach einem der Ansprüche 1 bis 16, **dadurch gekennzeichnet**, daß die Zentriermittel (30) zwischen der festen Abdeckkappe (15) und der beweglichen Abdeckkappe (12) zum Einsatz kommen.

18. Anschluß nach Anspruch 17, **dadurch gekennzeichnet,** daß die Zentriermittel eine kegelstumpfförmige Austiefung mit flachem Boden, die stirnseitig in der beweglichen Abschlußkappe (12) ausgebildet ist, und einen formschlüssigen Vorsprung umfassen, der stirnseitig in der festen Abschlußkappe (5) ausgebildet ist.

19. Anschluß nach einem der Ansprüche 16 bis 18, **dadurch gekennzeichnet**, daß ein Spiel (E) zwischen der beweglichen Dichtung (6) und der Buchse (11) des anderen Elements (22) besteht, wenn die Abschlußkappen (5, 12) miteinander in Kontakt kommen.

20. Anschluß nach einem der Ansprüche 1 bis 19, **dadurch gekennzeichnet**, daß die feste Abschlußkappe (5) und die bewegliche Dichtung (6) am Aufnahmeelement (21) angebracht sind, während die bewegliche Abschlußkappe (12) und ihre zugehörige Dichtung (13) am Steckelement (22) angebracht sind.
